# EUROPÄISCHE PATENTSCHRIFT

(11) **EP 4 088 911 B1**
(45) Veröffentlichungstag und Bekanntmachung des Hinweises auf die Patenterteilung: **20.08.2025**
(21) Anmeldenummer: 21173377.9
(22) Anmeldetag: 11.05.2021
(51) Int. Cl.: B29C 65/02, B29C 65/78, B29D 23/20, B29C 53/08, B29C 53/20, B29L 23/20

(54) **VERFAHREN UND VORRICHTUNG ZUR VERBESSERUNG DER RUNDHEIT VON TUBENKÖRPERN SOWIE VERFAHREN UND VORRICHTUNG ZUM HERSTELLEN VON VERPACKUNGSTUBEN**
METHOD AND DEVICE FOR IMPROVING THE ROUNDNESS OF TUBE BODIES AND METHOD AND DEVICE FOR MANUFACTURING PACKAGING TUBES
PROCÉDÉ ET DISPOSITIF D'AMÉLIORATION DE LA ROTONDITÉ DES CORPS DE TUBE, AINSI QUE PROCÉDÉ ET DISPOSITIF DE FABRICATION DE TUBES D'EMBALLAGE

(43) Veröffentlichungstag der Anmeldung: 16.11.2022
(73) Patentinhaber: PackSys Global AG, 8630 Rüti ZH (CH)
(72) Erfinder: GUIDARELLI, Sandro, 8630 Rüti (CH); ESSER, Ulrich, 8630 Rüti (CH)
(74) Vertreter: Patent- und Rechtsanwälte Behrmann Wagner PartG mbB

(56) Entgegenhaltungen:
- EP-A1- 2 188 110
- EP-B1- 2 188 110
- CN-B- 102 909 855

## Beschreibung

Die vorliegende Erfindung betrifft ein Verfahren zur Verbesserung der Rundheit von Tubenrohr-Rohlingen, nachfolgend als Tubenkörper bezeichnet, ein Verfahren zur Herstellung von Verpackungstuben aus einem Tubenkörper und einem Kopf zur Anbringung an dem Tubenkörper nach dem Oberbegriff des Anspruchs 9, ferner eine Vorrichtung zur Verbesserung der Rundheit von Tubenkörpern für Verpackungstuben und schließlich eine Vorrichtung zur Herstellung von Verpackungstuben aus einem Tubenkörper und einem Kopf zur Anbringung an dem Tubenkörper nach dem Oberbegriff des Anspruchs 16.

Verpackungstuben werden in der Regel aus einem Tubenrohr bzw. Tubenkörper und einem Kopf hergestellt, wobei der Kopf an einem axialen Ende des Tubenrohrs oder Tubenkörpers mit diesem verbunden wird. Das zweite axiale Ende des Tubenrohrs bleibt in der Regel zur rückwärtigen Befüllung der Verpackungstube geöffnet und wird erst von dem Befüller oder Abfüller verschlossen und versiegelt.

Die Tubenrohre oder Tubenkörper werden, soweit diese Kunststoff als Grundmaterial aufweisen, aus einem Kunststofflaminatbogen gefertigt, bei dem die unterschiedlichen Lagen des Kunststofflaminats unterschiedliche Funktionen der Tube oder des Tubenkörpers verwirklichen oder verbessern. So können beispielsweise Barriereschichten, Schichten zur Erreichung einer ausreichenden mechanischen Stabilität, Verzierungsaußenschichten und verschiedene andere Schichten in einem derartigen Laminat vorgesehen sein.

Das Laminat wird in der Regel als flächiges Ausgangsmaterial zur Verfügung gestellt und dann zu einem rohrförmigen Körper umgeformt und anschließend zu einem Rohr oder Endlosrohr verbunden, indem an einer Überlappungs- oder Stoßstelle zweier gegenüberliegender Enden des Laminatbogens eine Verbindungsnaht, insbesondere eine Schweißnaht hergestellt wird, die sich in Längsrichtung erstreckt und damit auch Längsnaht genannt wird. Zur Weiterverarbeitung des so hergestellten Rohres oder Endlosrohres, insbesondere zur Herstellung von Verpackungstuben, ist eine möglichst vollständige oder perfekte geometrische Rundheit des Querschnitts des Rohres gewünscht oder beabsichtigt. Sowohl aus technischen Gründen, beispielsweise aus Gründen der Weiterverarbeitbarkeit im Rahmen der Verbindung mit dem Tubenkopf oder im Rahmen der Befüllung, als auch aus Gründen der Handhabbarkeit oder der Bedruckung, ist eine möglichst optimale Rundheit gewünscht oder gefordert. Durch die Erzeugung der Längsnaht oder Schweißnaht kommt es jedoch durch die dabei entstehenden Materialveränderungen, Versteifungen, Verspannungen und sonstige Inhomogenitäten zur Ausbildung einer mehr oder weniger stark ausgeprägten Ovalität oder insgesamt einer Abweichung von einer kreisrunden Geometrie des Querschnitts.

Die Problematik der mangelnden Rundheit oder der Ovalität der Tubenrohre oder Tubenkörperkörper ist im Stand der Technik bekannt und wurde bereits durch verschiedene technische Ansätze adressiert.

Beispielsweise sind Vorrichtungen und Verfahren bekannt, die mit einer thermischen Nachbehandlung oder einer Temperaturbeaufschlagung versuchen die Ovalität zu minimieren oder die Rundheit zu verbessern. Zu diesem Ansatz ist beispielsweise bekannt die EP 2 276 622 A1, die CH 695 937 A5 und weitere Offenbarungen, wie die der EP 2 188 110 A1.

Auch die CN 102 909 855 B betrifft eine Vorrichtung zur Verbesserung der Rundheit von Endlosschläuchen für Tubenkörper. Dabei sollen die frisch geschweißten Endlosrohre vor einer Vereinzelung mehrfach nach innen und außen verformt werden, um die Auswirkungen der Schweißnaht auf die Form oder den Querschnitt des Endlosschlauchs zu reduzieren. Sowohl die Verformung der "frisch verschweißten Schläuche" als auch die mehrfach wechselnde Verformung nach innen und außen beschränken dabei den möglichen Grad der Verformung und machen damit den beschriebenen hohen anlagentechnischen Aufwand nötig, um die Rundheit positiv zu beeinflussen.

Die bekannten Lösungen wirken einer Ovalität am Endlosrohr entgegen, was sich dann auch auf die aus dem Endlosrohr vereinzelten Tubenkörper auswirkt.

Es hat sich jedoch herausgestellt, dass die bekannten Ansätze zur Verbesserung der Rundheit von Tubenkörpern nicht ausreichend sind, weil diese vom Resultat her, also von der Verbesserung der Rundheit entweder nicht ausreichend oder nicht zuverlässig genug sind oder aber einen zu großen vorrichtungstechnischen und verfahrenstechnischen Aufwand erfordern, um die Rundheit ausreichend zu verbessern.

Ausgehend von dem bekannten Stand der Technik ist es daher Aufgabe der vorliegenden Erfindung Verfahren und Vorrichtungen vorzuschlagen, die mit einfachen Mitteln erlauben die Rundheit von, bevorzugt aus Kunststofflaminat hergestellten, Tubenkörpern zu verbessern.

Im Hinblick auf das Verfahren zur Verbesserung der Rundheit von einer Längsnaht, insbesondere einer Längsschweißnaht, aufweisenden Tubenkörpern für Verpackungstuben wird diese Aufgabe mit den Merkmalen des Anspruchs 1 gelöst. Im Hinblick auf ein Verfahren zur Herstellung von Verpackungstuben wird diese Aufgabe mit den Merkmalen des Anspruchs 9 gelöst. Bezogen auf eine Vorrichtung zur Verbesserung der Rundheit von einer Längsnaht, insbesondere einer Längsschweißnaht, aufweisenden Tubenkörpern für Verpackungstuben wird die Aufgabe mit den Merkmalen des Anspruchs 11 gelöst. Ferner wird die Aufgabe durch eine Vorrichtung zur Herstellung von Verpackungstuben aus einem Tubenkörper und einem Kopf zur Anbringung an dem Tubenkörper mit den Merkmalen des Anspruchs 16 gelöst.

Vorteilhafte Ausführungsformen und Ausgestaltungen sind Gegenstand der Unteransprüche sowie der nachfolgenden Anspruchsstütze und Figurenbeschreibung.

Das Verfahren zur Verbesserung der Rundheit von einer Längsnaht, insbesondere einer Längsschweißnaht, aufweisenden Tubenkörpern, die im Fachjargon auch als "Tube-Bodies" bekannt sind, für Verpackungstuben, bevorzugt als Teil eines Verpackungstubenherstellungsverfahrens, umfasst neben den bekannten Verfahrensschritten in Form einer Übergabe einzelner Tubenkörper an eine Transporteinrichtung und den Transport der Tubenkörper entlang einer Transportstrecke mit der Transporteinrichtung auch die erfindungsgemäßen Verfahrensschritte, gemäß derer während des Transports entlang der Transportstrecke der Tubenkörper eine abschnittsweise und/oder zeitweise radiale Verformung nach innen erfährt, in dem der Tubenkörper Verformungsmittel passiert.

In der vorliegenden Beschreibung soll, soweit nicht anders angegeben, unter einer radial nach innen gerichteten Verformung eine Verformung eines Teils der Oberfläche der Tubenkörper verstanden werden, die im Wesentlichen senkrecht auf den Tubenkörper einwirkt und in Richtung eines Mittelpunktes oder Schwerpunktes des Tubenkörpers gerichtet verläuft.

Der Grundgedanke der vorliegenden Erfindung basiert auf einer mechanischen Kompensation oder einer mechanischen Rückverformung der Tubenkörper, die auf einen Abschnitt oder einen Teilbereich des Umfangs oder des Querschnitts des Tubenkörpers nach innen wirkt oder einwirkt und damit die Ovalität verringert oder anders ausgedrückt die Rundheit verbessert. Die Grundidee der Erfindung basiert darauf, dass die Tubenkörper sich auf der Transporteinrichtung oder in der Transporteinrichtung entlang der Transportstrecke an den Verformungsmitteln vorbeibewegen, sodass über die Wechselwirkung zwischen Eigenschaften der Transporteinrichtung einerseits, wie beispielsweise Transportgeschwindigkeit, und Eigenschaften der Verformungsmittel andererseits, beispielsweise der Grad der radialen Verformung, gut eingestellt werden kann, so dass zwar einerseits eine plastische Verformung oder eine Verformung mit einem plastischen Anteil stattfindet, die gerade die Rundheit verbessert oder die Asymmetrie verringert, gleichzeitig jedoch sichergestellt wird, dass die elastischen Anteile der Verformung oder anders ausgedrückt die elastischen Rückstellkräfte der Tubenkörper ausreichend sind, um die Tubenkörper nach dem Passieren der Verformungsmittel in einen Zustand zurückzuführen, der einen grundsätzlich runden Querschnitt der Tubenkörper und darüber hinaus auch eine verbesserte geometrische Rundheit der Tubenkörper aufweist.

Die Erfindung macht sich dabei die Erkenntnis zunutze, dass die Tubenkörper verglichen mit dem Endlosrohr eine deutlich stärkere zeitweise und/oder abschnittsweise Verformung erfahren können, ohne dass dadurch die Tubenkörper beschädigt, insbesondere verkratzt, oder geknickt werden. Dadurch wird in vorteilhafter Weise erreicht, dass das Verfahren mit verhältnismäßig einfachen Vorrichtungselementen realisiert werden kann und trotzdem eine hervorragende Verbesserung der Rundheit erreicht. Gleichzeitig wird vorteilhaft ermöglicht, dass das Verfahren in einen Verpackungstubenherstellungsprozess oder ein Verfahren zur Herstellung von Verpackungstuben integriert werden kann und besonders vorteilhaft in bekannte Verfahren und Vorrichtungen auch nachträglich integriert oder nachgerüstet werden kann.

Als besonders vorteilhaft hat sich dabei auch erwiesen, dass das erfindungsgemäße Verfahren, nicht zuletzt auch wegen seiner einfachen Realisierbarkeit auf der Verfahrens- und Vorrichtungsebene, auch mit bereits bekannten Ansätzen, Vorrichtungen und Verfahren zu Verbesserung der Rundheit der Tubenkörper kombiniert werden kann, und dann die anderen bekannten oder vorbekannten Mechanismen zur Reduzierung der Ovalität unterstütz oder verbessert.

Das Verfahren zeichnet sich zudem auch dadurch aus, dass die Verbesserung der Rundheit ohne einen Dorn oder Mandrel realisiert wird, wodurch die Implementierung in der Vorrichtung deutlich erleichtert wird.

Soweit nachfolgend nicht explizit anders ausgeführt wird, soll für die nachfolgende Offenbarung grundsätzlich davon ausgegangen werden, dass die Tubenkörper aus einem mehrlagigen Kunststoff-Laminat oder zumindest einem kunststoffhaltigen Laminat hergestellt oder erzeugt werden.

Außerdem soll für die Offenbarung davon ausgegangen werden, dass es sich bei den Tubenkörpern um einzelne und damit zur direkten oder unmittelbaren Weiterverarbeitung zu Verpackungstuben geeigneten Tubenkörpern handelt. Damit soll der Begriff Tubenkörper insbesondere gegenüber einem verfahrensmäßig betrachteten Vorläufer oder Vorgänger abgegrenzt werden, nämlich einem aus einem Laminat durch Verschweißen hergestellten Endlosrohr, welches gemäß dem Verständnis der vorliegenden Offenbarung erst durch Vereinzelungsvorgänge zu einer Vielzahl von Tubenkörpern wird. Das Endlosrohr als verfahrensmäßiger Vorgänger des Tubenkörpers wird im Wortschatz des Fachmanns auch als "Sleeve" bezeichnet.

Gemäß einer ersten besonders vorteilhaften Ausführungsform des Verfahrens kann vorgesehen sein, dass eine maximale radiale Verformung der Tubenkörper in einem Bereich der Längsnaht der Tubenkörper erfolgt. Dies bedeutet, dass die Tubenkörper und die Verformungsmittel so zueinander angeordnet oder ausgerichtet werden, dass die Verformungsmittel im Querschnitt der Tubenkörper betrachtet von radial außen nach radial innen auf den Tubenkörper einwirken und dabei im Wesentlichen oder direkt mit einem Abschnitt des Tubenkörpers in Kontakt kommen, in dem die Längsnaht angeordnet oder ausgebildet ist. Dabei wird in vorteilhafter Weise erreicht, dass der axiale oder sich über die Längsrichtung erstreckende Abschnitt der Längsnaht der Tubenkörper, der im Wesentlichen die Verzerrung oder Abkehr von einer geometrisch kreisrunden Querschnittsform verursacht, einer maximalen Verformung und/oder einer maximalen Krafteinwirkung ausgesetzt wird, sodass in diesem Bereich am ehesten eine plastische, nicht reversible Verformung erzeugt wird und folglich vorteilhaft die Rundheit verhindernde oder beeinträchtigende Spannungen oder Material- oder GefügeEigenschaften beeinflusst werden können.

Es kann dabei vorgesehen sein, dass die Tubenkörper mit einer speziellen Ausrichtung auf die Transporteinrichtung aufgegeben werden. Alternativ kann das Verfahren oder die Vorrichtung einen Ausrichtungsschritt oder eine Ausrichtungseinheit umfassen, die sicherstellt, dass die Tubenkörper in der gewünschten Ausrichtung die Verformungsmittel passieren, so dass der Bereich der Längsnaht die maximale Verformung nach radial innen erfährt.

Bei einer weiteren, besonders vorteilhaften Ausgestaltung des Verfahrens kann vorgesehen sein, dass die Verformung durch die Verformungsmittel die Tubenkörper in einen Querschnitt umformt oder zumindest zeitweise umformt, der eine u-förmige oder v-förmige Kontur nachbildet, wobei die Längsnaht der Tubenkörper im Bereich einer Spiegelsymmetrieachse der verformten Kontur oder des verformten Querschnitts angeordnet ist. Durch die genannte Verformung, die beispielsweise entstehen kann, wenn ein Verformungsmittel in einer radialen Richtung auf den Mittelpunkt oder Schwerpunkt des annäherungsweise kreisrunden Querschnitts des Tubenkörpers gerichtet den Tubenkörper verformt, kann in vorteilhafter Weise gleichzeitig erreicht werden, dass im Bereich der Längsnaht die größtmögliche dauerhafte oder plastische Einwirkung stattfindet, während gleichzeitig in Bereichen des Tubenkörpers - in Umfangsrichtung -, die weiter von der Naht oder Längsnaht entfernt sind, im Wesentlichen elastische Verformungen vorgenommen werden, die damit die Rundheit des Tubenkörpers nicht negativ beeinflussen und zudem auch die notwendigen Rückstellkräfte zur Verfügung stellen oder aufbauen, um nach der Einwirkung der Verformungsmittel den Tubenkörper wieder in eine Ausgangsform oder einen Ausgangsquerschnitt, besser gesagt in einen gegenüber dem Ausgangsquerschnitt verbesserten, kreisrunden Querschnitt zurück zu überführen. Bei der Verformung zu einem u-förmigen oder v-förmigen Querschnitt entstehen, gerade wenn die Spiegelsymmetrieachse im Bereich der Längsnaht verläuft, im Bereich der Längsnaht und den angrenzenden Bereichen Krümmungen, die im Vergleich zu der ursprünglichen Krümmung des kreisrunden oder leicht ovalen Querschnitts gerade entgegengesetzt verlaufen. Durch diese Umkehr der Krümmungsverhältnisse kann besonders gut auf Versteifungen, Verspannungen oder sonstige Eigenschaften eingewirkt werden, die einer geometrisch runden Form des Querschnitts des Tubenkörpers entgegenwirken.

In einer weiteren, besonders bevorzugten Ausführungsform des Verfahrens kann vorgesehen sein, dass entlang der Transportstrecke oder zumindest entlang eines Teils der Transportstecke die Rotation der Tubenkörper um eine Längsachse, mittels Führungsmitteln, verhindert wird. Dies bedeutet auch, dass zumindest während eines Teils des Transports der Tubenkörper entlang der Transportstrecke und insbesondere auch während der Einwirkung der Verformungsmittel die Anlageflächen oder die Anlagebereiche zwischen der Transporteinrichtung und den Tubenkörpern konstant oder unverändert bleibt. Die Führungsmittel können beispielsweise als Teil der Transporteinrichtung ausgebildet sein. Beispielsweise kann die Transporteinrichtung ein gummiertes Band mit einem V-förmigen Profil ("V-Belt") aufweisen, sodass die gummierte Kontur des Bandes eine Rotation der Tubenkörper auf der Transporteinrichtung, insbesondere auch während der Einwirkung der Verformungsmittel, verhindert. Alternativ können die Führungsmittel auch durch mehrere, bevorzugt vier, Riemen realisiert werden. Die Riemen können ebenfalls gummiert ausgeführt sein und/oder in der Form eines Rechtecks oder Quadrats um den Tubenkörper angeordnet sein. Bevorzugt können die Riemen angetrieben sein, um den Transport der Tubenkörper zu bewerkstelligen. Vorteilhaft können also in beiden Ausführungsformen Teile der Transporteinrichtung auch die Führungsmittel bereitstellen, so dass diese gleichzeitig den Transport entlang der Transportstrecke mitverursachen oder unterstützen und die Rotation der Tubenkörper um die Längsachse verhindern.

Dadurch kann sichergestellt werden, dass die Tubenkörper in einer definierten Position und mit einer definierten Ausrichtung auf die Transporteinrichtung aufgebracht und in dieser Position und Ausrichtung transportiert und von den Verformungsmitteln beeinflusst, insbesondere verformt werden.

Außerdem kann vorteilhaft vorgesehen sein, dass entlang der Transportstrecke, zumindest abschnittsweise, bevorzugt über die gesamte Erstreckung oder Ausdehnung der Verformungsmittel in Richtung der Transportstrecke, eine seitliche Verformung der Tubenkörper durch Seitenführungselemente begrenzt wird. Die Seitenführungselemente können beispielsweise als Seitenwände oder als seitliche Führungsprofile oder als zur Transporteinrichtung hin konkav ausgebildete Führungskörper, beispielsweise Führungsrollen ausgebildet sein, die einerseits das Wegdrücken der Tubenkörper durch die Verformungsmittel verhindern und gleichzeitig die Verformung des Tubenkörpers in einem Bereich von etwa ± 90°bezogen auf die Position der Längsnaht seitlich begrenzen oder beschränken. Damit kann in besonders vorteilhafter Weise die Verformung in Bereichen begrenzt werden, die ansonsten der gezielten Kaltumformung oder Warmumformung im Bereich der Längsnaht entgegenwirken würden oder diese verringern würden. Gleichzeitig wird dadurch sichergestellt, dass unter der Einwirkung der Verformungsmittel keine Tubenkörper aus der Transporteinrichtung entfernt, insbesondere herausgedrückt werden.

In einer weiter vorteilhaften Ausgestaltung des Verfahrens kann vorgesehen sein, dass die Verformung entlang der Transportstrecke variiert wird, indem sich die Verformungsmittel an unterschiedlichen Stellen der Transportstrecke unterschiedlich weit in Richtung der Tubenkörper und/oder der Transporteinrichtung erstrecken. Besonders bevorzugt kann in diesem Zusammenhang vorgesehen sein, dass in einem ersten Abschnitt der Verformungsmittel eine geringe oder mäßige Verformung stattfindet, die dann mit zunehmendem Transport entlang der Transportstrecke zunimmt. In einem Endabschnitt der Verformungsstrecke, also der Strecke auf der die Verformungsmittel auf die Tubenkörper einwirken, kann entweder vorgesehen sein, dass die Verformung graduell wieder abnimmt oder dass die Verformung schlagartig aufgehoben wird. Bei einer schlagartigen Aufhebung der Verformung kann vorteilhaft die elastische Vorspannung der verformten Tubenkörper genutzt werden, um in die Ausgangsform oder verbesserte Ausgangsform zurückzukehren. Es besteht jedoch gleichzeitig die Gefahr, dass eine stark ungleichmäßige Rückumformung stattfindet, die im schlimmsten Fall Knicke oder sonstige Beschädigungen oder Beeinträchtigungen auf dem Tubenkörper zurücklassen könnten. Bei einer graduellen Aufhebung oder Verringerung der Verformung besteht weniger die Gefahr der Beschädigung der Tubenkörper. Gleichzeitig ist jedoch darauf zu achten, dass die Tubenkörper vollständig in einen Zustand zurücküberführt werden, indem die gewünschte, verbesserte Querschnittsform gegenüber der Ausgangssituation erreicht wird.

In einer weiteren, besonders vorteilhaften Ausgestaltung des Verfahrens kann vorgesehen sein, dass die Verformungsmittel zumindest zeitweise eine radiale Verformung eines Teils der Oberfläche der Tubenkörper von mehr als 40%, bevorzugt mehr als 60%, besonders bevorzugt mehr als 80%, insbesondere mehr als 95% des Rohrdurchmessers oder Tubenrohr-Durchmessers erzeugt. Mit anderen Worten ausgedrückt bedeutet dies, dass der in Umfangsrichtung betrachtete Abschnitt des Tubenkörpers, der die Längsnaht aufweist wenigstens bis zu einem Bereich nach innen verformt wird, der in etwa im Bereich des Mittelpunkts oder Schwerpunkts des ursprünglich unverformten Tubenkörpers angeordnet ist. In einem Extremfall, nämlich beispielsweise bei einer Verformung von 95% oder mehr wird die Längsnaht bei einer maximalen Verformung bis oder bis fast an die im ursprünglich unverformten Zustand gegenüberliegende Seite des Tubenkörpers verformt.

Der Grad der notwendigen, maximalen Verformung hängt im Wesentlichen von der ursprünglichen Ovalität oder vom Grad der mangelnden Rundheit vor der Verformung ab. Wie später noch erörtert werden wird, ist auch die Temperatur, insbesondere die Temperatur der Längsnaht im Zeitpunkt oder während der Zeitspanne der Verformung eine Einflussgröße und kann damit die notwendige Verformung oder den notwendigen Grad der Verformung, bezogen auf den ursprünglichen Durchmesser, die notwendig ist, um eine Verbesserung der Rundheit zu erreichen mitbeeinflussen oder mitbestimmen.

In einer weiteren, vorteilhaften Ausgestaltung des Verfahrens kann vorgesehen sein, dass die Verformungsmittel eine Kontaktoberfläche zur Anlage an den Tubenkörpern aufweist, die sich bei der Anlage an den Tubenkörper mit dem Tubenkörper mitbewegt oder an diesem reibungsfrei abgleitet. Dadurch wird im Wesentlichen erreicht, dass die Außenseite der Tubenkörper nicht beschädigt, insbesondere nicht verkratzt wird. Die Verformungsmittel, die beispielsweise als eine Vielzahl von einzelnen Verformungselementen ausgeführt sein können, können beispielsweise eine kreisförmige Kontaktoberfläche aufweisen, indem sie als Räder oder Scheiben ausgebildet sind, wobei dann die Geschwindigkeit der Kontaktoberfläche gleich der Transportgeschwindigkeit der Tubenkörper auf der Transporteinrichtung ist oder sein muss, um sicherzustellen, dass die Kontaktoberfläche sich mit den Tubenkörpern mitbewegt an diesen abgleitet und gerade nicht an dieser entlangschleift, entlangreibt od. dgl. Die Verformungsmittel können beispielsweise aber auch als umlaufendes Endlosband ausgeführt sein, wobei dann der zum jeweiligen Zeitpunkt der Transporteinrichtung zugewandte Teil des Endlosbandes die Kontaktoberfläche ausbildet. Auch in diesem Fall ist dann sicherzustellen, dass die Bewegungsgeschwindigkeit in Richtung der Transportstrecke gleich ist, wie die der Tubenkörper auf der Transporteinrichtung.

Eine weitere, besonders vorteilhafte Variante des Verfahrens sieht vor, dass die Verformungsmittel, zumindest im Betrieb, mit einem aktiven Kühlverfahren gekühlt werden. Damit kann ermöglicht werden, dass im verformten Zustand oder Verformungszustand der Tubenkörper eine Wärmeabfuhr aus dem Tubenkörper, bevorzugt aus dem Bereich der Längsnaht stattfindet, die dann dazu führt, dass Eigenschaften und Zustände des Verformungszustandes besser konserviert oder aufrechterhalten werden, sodass die Rundheit des Tubenkörpers, nach seiner Rückkehr in die verbesserte Ursprungsquerschnittsform besser erreicht und beibehalten werden kann.

Weiterhin kann vorteilhaft vorgesehen sein, dass die Verformungsmittel so angetrieben werden, dass die Bewegung der Verformungsmittel und deren Kontaktoberflächen und die Bewegung oder Bewegungsrichtung der Transporteinrichtung gleichgerichtet, insbesondere gleich schnell, sind. Es ist von besonderem Interesse sicherzustellen, dass keine Reibung zwischen den Verformungsmitteln, insbesondere den Kontaktoberflächen der Verformungsmittel und den Tubenkörpern, insbesondere in dem Bereich der Längsnaht, erzeugt wird. Um dies sicherzustellen, kann bevorzugt eine vorgeschlagene Ausführungsform vorgesehen sein, in der die Verformungsmittel selbst aktiv angetrieben werden. Dabei ist der Antrieb dann möglichst genau so einzustellen, dass die Tangentialgeschwindigkeiten der Verformungsmittel in Richtung der Transportstrecke mit der Geschwindigkeit der Transporteinrichtung und/oder den darauf befindlichen Tubenkörpern identisch ist.

Außerdem kann gemäß einer besonders bevorzugten Ausführungsform vorgesehen sein, dass die Verformung in einem Zustand des Tubenkörpers beginnt, in dem die Längsnaht des Tubenkörpers eine Temperatur von mehr als 40°C, bevorzugt von mehr als 50°C aufweist. Dadurch kann in vorteilhafter Weise erreicht werden, dass die Verbindungsnaht oder die Längsnaht noch nicht vollständig ausgehärtet ist, was wiederum eine Einwirkung zur Verbesserung der Rundheit auf die Längsnaht erleichtert. Besonders vorteilhaft kann in diesem Zusammenhang sein, wenn die Verformungsmittel und/oder der Tubenkörperselbst im verformten Zustand oder Verformungszustand gekühlt wird, da dann eine die Rundheit befördernde Aushärtung oder Fixierung der Längsnaht im verformten Zustand stattfindet oder beschleunigt wird. Die Temperatur der Schweißnaht zum Beginn der Verformung kann beispielsweise über einen räumlichen und/oder zeitlichen Abstand zwischen dem Erzeugen der Schweißnaht und dem Verformen der Tubenkörper und der dementsprechenden Anordnung der dazugehörigen Verformungsmittel eingestellt oder bestimmt werden. Je näher die Verformungsmittel an den Ort oder an die Stelle, sowohl zeitlich als auch räumlich, herangeführt oder positioniert werden, in dem die Längsnaht erzeugt wird, umso größer ist die Temperatur oder Restwärme der Schweißnaht oder Längsnaht zum Beginn der Verformung.

Besonders vorteilhaft kann vorgesehen sein, dass die Verformung der Tubenkörper über einen Zeitraum von mehr als 0,5s stattfindet. Dies kann besonders vorteilhaft sein, um gleichzeitig sicherzustellen, dass die ausreichende Verformung stattfindet und die Verformung einen nachhaltigen Effekt auf den endgültigen Querschnitt der Tubenkörper ausübt, beispielsweise indem die Längsnaht im verformten Zustand abgekühlt oder ansonsten verfestigt oder ausgehärtet wird.

Insgesamt werden die Einwirkungsdauer der Verformung und der Temperaturbereich, in dem die Verformung stattfindet, vorteilhaft an das Materialsystem des Laminats angepasst. So können beispielsweise für spezielle Laminatsysteme höhere Temperaturen vorteilhaft sein.

Eine weitere, besonders vorteilhafte Ausgestaltung sieht, wie oben bereits andiskutiert, vor, dass der Tubenkörper, insbesondere der Bereich der Längsnaht des Tubenkörpers während der Verformung gekühlt oder aktiv mit einem Kühlmittel oder Kühlmedium beaufschlagt oder in Kontakt gebracht wird. Dies kann beispielsweise durch eine oder mehrere Düsen ermöglicht werden, die kalte Luft oder ein anderes Wärmetransport-Fluid, beispielsweise auch Wasser, in Richtung der Oberfläche des Tubenkörpers im Bereich der Längsnaht aufbringt, um somit die Kühlung der Längsnaht oder einen Wärmeabtransport aus dem Bereich der Längsnaht zu bewirken.

Die oben genannte Aufgabe wird auch mit einem Verfahren zur Herstellung von Verpackungstuben aus einem Tubenkörper und einem Kopf zur Anbringung an dem Tubenkörper, insbesondere zur Anbringung an einem axialen Ende des Tubenkörpers gelöst, bei dem gemäß der Erfindung ein Verfahren zur Verbesserung der Rundheit von eine Längsnaht, insbesondere eine Längsschweißnaht, aufweisendem Tubenkörpergemäß einer der vorangehend beschriebenen Ausführungsform zum Einsatz kommt. Grundgedanke der Erfindung ist es hierbei das Verfahren zur Verbesserung der Rundheit in den Herstellungsprozess der Tuben einzubinden oder einzubeziehen, sodass vor dem Anbringen oder Befestigen des Kopfes oder Tubenkopfes eine verbesserte Rundheit der Tubenkörper hergestellt ist.

Gemäß einer vorteilhaften Ausführungsform kann vorgesehen sein, dass die Tubenkörper aus einem Endlosrohr vereinzelt werden, bevor die Verformung durchgeführt wird. Bevorzugt kann die Ausbildung oder Erzeugung der Längsnaht durchgeführt werden, bevor die Verformung beginnt und bevor die Vereinzelung stattfindet.

Weiterhin kann vorteilhaft vorgesehen sein, dass die Verformung durchgeführt wird, während die Tubenkörper einer Einrichtung zum Anbringen des Kopfes (Header) zugeführt werden oder während die Tubenkörper in der Einrichtung zur Anbringung des Kopfes (Header) verarbeitet werden. Beide Varianten ermöglichen in besonderes vorteilhafter Weise dass der grundsätzliche Verfahrensablauf nicht geändert werden muss oder ansonsten beeinträchtigt wird. Mit anderen Worten ausgedrückt bedeutet die Integration der Verformung in die Einrichtung zur Anbringung des Kopfes oder in einen Bereich der Zuführung zur Einrichtung zur Anbringung des Kopfes, dass der ursprüngliche Verfahrens- und Materialfluss sowie die dazugehörigen Taktzeiten beibehalten werden können. Dies bedeutet auch, dass besonders bevorzugt die Nachrüstung des Verfahrens zur Verbesserung der Rundheit in bestehende Verfahren zur Herstellung von Verpackungstuben ermöglicht wird.

Im Hinblick auf eine Vorrichtung zur Verbesserung der Rundheit von einer Längsnaht, insbesondere einer Längsschweißnaht, aufweisenden Tubenkörpern für Verpackungstuben, bevorzugt als Teil einer Verpackungstubenherstellungsvorrichtung, umfassend eine Transporteinrichtung zur Aufnahme und zum Transport einzelner Tubenkörper entlang einer Transportstrecke wird die oben genannte Aufgabe dadurch gelöst, dass Verformungsmittel vorgesehen sind, die so angeordnet sind, dass während des Transports entlang der Transportstrecke die Tubenkörper eine abschnittsweise und/oder zeitweise radiale Verformung nach innen erfahren, indem die Transporteinrichtung die Tubenkörper an den Verformungsmitteln vorbeitransportiert.

Zur Vermeidung unnötiger Wiederholungen sollen alle verfahrensmäßig offenbarten Merkmale, Eigenschaften und Vorteile auch als vorrichtungsmäßig offenbart gelten. Gleiches gilt für die Vorrichtungsmerkmale, und deren Eigenschaften und Vorteile, die auch als verfahrensmäßig offenbart gelten.

Mit der erfindungsgemäßen Vorrichtung wird wie auch bereits mit dem erfindungsgemäßen Verfahren erreicht, dass die mangelnde Rundheit der Tubenkörper mit verhältnismäßig geringem konstruktiven Aufwand oder Aufwand an Vorrichtungsmerkmalen verbessert wird und die Vorrichtung zudem grundsätzlich die Eignung aufweist in einen bestehenden Prozess oder in eine bestehende Vorrichtung zur Herstellung von Verpackungstuben integriert zu werden. Denn die Verformungsmittel können beispielsweise in die Transportstrecke zwischen Vereinzelung der einzelnen Tubenkörper und Einrichtung zur Anbringung des Kopfes (Header) angeordnet werden. Alternativ ist auch eine Integration der Verformungsmittel in die Einrichtung zur Anbringung des Kopfes (Header) möglich.

Gemäß einer ersten vorteilhaften Ausführungsform der Vorrichtung kann vorgesehen sein, dass die Verformungsmittel eine Vielzahl von einzelnen Verformungselementen umfassen. Beispielsweise können die Verformungselemente, die gemeinsam die Verformungsmittel ausbilden als einzelne drehbar gelagerte und/oder angetriebene Scheiben oder Scheibenräder od. dgl. ausgebildet sein. Dadurch kann in vorteilhafter Weise die Konstruktion oder die konstruktive Ausgestaltung der Verformungsmittel besonders leicht realisiert werden.

Vorteilhaft kann vorgesehen sein, dass die Verformungsmittel in einer Absolutposition oder Befestigungsposition bezüglich der Transportstrecke und/oder der Transportrichtung ortsfest angeordnet sind. Dies kann dementsprechend auch in gleichem Maße für die Verformungselemente gelten, falls die Verformungsmittel durch eine Vielzahl von Verformungselemente gebildet werden. Die ortsfeste Anordnung oder Lagerung der Verformungsmittel/Verformungselemente ermöglicht ebenfalls eine konstruktiv einfache Ausgestaltung. Es kann dabei jedoch gleichzeitig vorgesehen sein, dass in der Richtung senkrecht zur Transportstrecke und/oder der Transportrichtung, nämlich auf die Transporteinrichtung zugerichtet die Lagerung und/oder die Anordnung der Verformungsmittel variabel ist. Damit kann für die Verformungsmittel oder für einzelne Verformungselemente der Grad der Verformung der Tubenkörper dadurch verändert werden, dass die Verformungsmittel oder Verformungselemente weiter oder weniger weit auf die Transporteinrichtung zu positioniert oder angeordnet werden.

Bevorzugt kann vorgesehen sein, dass die Verformungselemente als drehbar gelagerte Scheiben oder Scheibenräder ausgebildet sind, deren jeweilige Lagerpunkte entlang der Transportstrecke angeordnet sind. Dadurch kann erreicht werden, dass die Tubenkörper nacheinander verschiedene Scheiben passieren und von jeder Scheibe oder jedem Scheibenrad separat während des Vorbeitransportes verformt werden.

Weiterhin kann vorteilhaft vorgesehen sein, dass die radial äußeren Bereiche der Verformungsmittel oder Verformungselemente eine Kontaktoberfläche zur Kontaktierung der Tubenkörper ausbilden. Bevorzugt können die Kontaktoberflächen der Verformungsmittel oder Verformungselemente in quer zur Richtung der Transportstrecke oder quer zur Längsrichtung der Tubenkörper gekrümmt, insbesondere konvex gekrümmt ausgebildet sein, um eine Knick- oder Kantenbildung der Tubenkörper im verformten Zustand oder Verformungszustand zu verhindern.

Weiterhin kann vorteilhaft vorgesehen sein, dass die Kontaktoberfläche der Verformungsmittel oder Verformungselemente an unterschiedlichen Stellen entlang der Transportstrecke einen unterschiedlichen Abstand zu den Transportmitteln aufweisen. Dadurch kann entlang der Transportstrecke oder entlang der Ausdehnung der Verformungsmittel eine jeweils unterschiedlich starke Verformung der Tubenkörper durch die Verformungsmittel oder Verformungselemente erreicht werden.

Außerdem kann besonders bevorzugt vorgesehen sein, dass Führungsmittel entlang der Transportstrecke angeordnet sind, die eine Rotation der Tubenkörper um eine Längsachse verhindern. Die Führungsmittel können beispielsweise in die Transporteinrichtung integriert sein oder mit der Transporteinrichtung zusammenwirken. Vorteilhaft kann beispielsweise vorgesehen sein, dass ein gummiertes Förderband oder Band mit einem V-förmigen Profil (V-Belt) dafür sorgt, dass die Tubenkörper nicht um die Längsachse verdreht oder rotiert werden, nachdem sie von der Transporteinrichtung aufgenommen oder empfangen wurden.

Außerdem kann vorteilhaft vorgesehen sein, dass Seitenführungselemente, die entlang der Transportstrecke, zumindest abschnittsweise, bevorzugt über die gesamte Erstreckung oder Ausdehnung der Verformungsmittel angeordnet sind, und eine seitliche Verformung der Tubenkörper begrenzen. Die Seitenführungselemente sind bevorzugt auf beiden Seiten der Transporteinrichtung angeordnet, und bevorzugt so bemessen, dass sich die Seitenführungselemente an einem von der Transporteinrichtung abgewandten und den Verformungsmitteln zugewandten Ende bis zu wenigstens 50%, bevorzugt bis zu wenigstens 70% des ursprünglichen Durchmessers der unverformten Tubenkörper erstrecken. Die Seitenführungselemente können bevorzugt als konkave Rollen oder Rollen mit einer konkaven Mantelfläche ausgebildet sein, die auf beiden Seiten der Transporteinrichtung senkrecht zur Transportrichtung rotierend gelagert angeordnet sind.

Besonders bevorzugt kann außerdem vorgesehen sein, dass die Verformungsmittel oder Verformungselemente mit Kühlelementen zusammenwirkend ausgebildet sind, die im Betrieb ein aktives Kühlen der Verformungsmittel oder Verformungselemente ermöglichen. Die Kühlelemente können beispielsweise als Düsen ausgebildet sein, die ein Kühlfluid auf die Verformungsmittel, Verformungselemente und/oder deren Kontaktoberfläche aufbringen. Es kann alternativ aber auch vorgesehen, dass die Kühlelemente einen Kühlfluidtransport in das Innere der Verformungsmittel oder Verformungselemente und aus diesen heraus sicherstellt, sodass eine Art der Innenkühlung der Verformungsmittel oder Verformungselemente ermöglicht wird.

Gemäß einer weiteren, bevorzugten Ausgestaltungsvariante kann vorgesehen sein, dass eine Kühleinheit vorgesehen ist, die eingerichtet ist die Tubenkörper, insbesondere die Längsnaht der Tubenkörper, während zumindest eines Teils der Einwirkung der Verformungsmittel zu kühlen. Dadurch wird eine Stabilisierung, Aushärtung oder Verfestigung der Längsnaht in dem verformten Zustand oder Verformungszustand befördert, was dann nach Aufheben der Verformung oder nach Passieren der Verformungsmittel zu einer verbesserten Rundheit der Tubenkörper beiträgt.

Die oben genannte Aufgabe wird auch durch eine Vorrichtung zur Herstellung von Verpackungstuben aus einem Tubenkörper und einem Kopf zur Anbringung an dem Tubenkörper dadurch gelöst werden, dass die Vorrichtung eine gemäß der vorangehenden Ausführungsformen beschriebene Vorrichtung zur Verbesserung der Rundheit von einer eine Längsnaht, insbesondere eine Längsschweißnaht, aufweisenden Tubenkörpern aufweist. Wie oben bereits ausgeführt kann besonders vorteilhaft die Vorrichtung zur Verbesserung der Rundheit in eine bekannte oder gattungsgemäße Vorrichtung zur Herstellung von Verpackungstuben integriert werden oder auch nachgerüstet werden.

Besonders vorteilhaft kann dabei vorgesehen sein, dass eine Vereinzelungsvorrichtung zur Vereinzelung von Tubenkörpern aus einem Endlosrohr vorgesehen ist, wobei die Vereinzelungseinrichtung so angeordnet ist, dass die Vereinzelung abgeschlossen ist, bevor die Verformungsmittel mit den Tubenkörpern in Kontakt kommen.

Besonders vorteilhaft kann vorgesehen sein, dass die Verformungsmittel zwischen einer Vereinzelungsvorrichtung und einer Einrichtung zur Anbringung des Kopfes angeordnet sind oder als Teil der Einrichtung zur Anbringung des Kopfes ausgebildet sind.

Nachfolgend Ausführungsformen, Vorteile und Wirkungen der vorliegenden Erfindung anhand der rein schematischen, beispielhaften Zeichnungen erläutert. Darin zeigen:
- Fig. 1:: unterschiedliche Querschnitte von Tubenkörpern;
- Fig. 2:: eine gattungsgemäße Vorrichtung zur Herstellung von Verpackungstuben;
- Fig. 3:: eine beispielhafte Darstellung einer erfindungsgemäßen Vorrichtung zur Verbesserung der Rundheit von Tubenkörpern sowie einen Ausschnitt einer erfindungsgemäßen Vorrichtung zur Herstellung von Verpackungstuben;
- Fig. 4a:: einen Querschnitt durch die Ebene A - A der Fig. 3;
- Fig. 4b:: eine abgewandelte Ausführungsform der Fig. 3 bzw. 4a.
- Fig. 5:: beispielhafte Querschnitte von einem zeitweise und abschnittsweise verformten Endlosrohr und einem zeitweise und abschnittsweise verformten Tubenkörper.

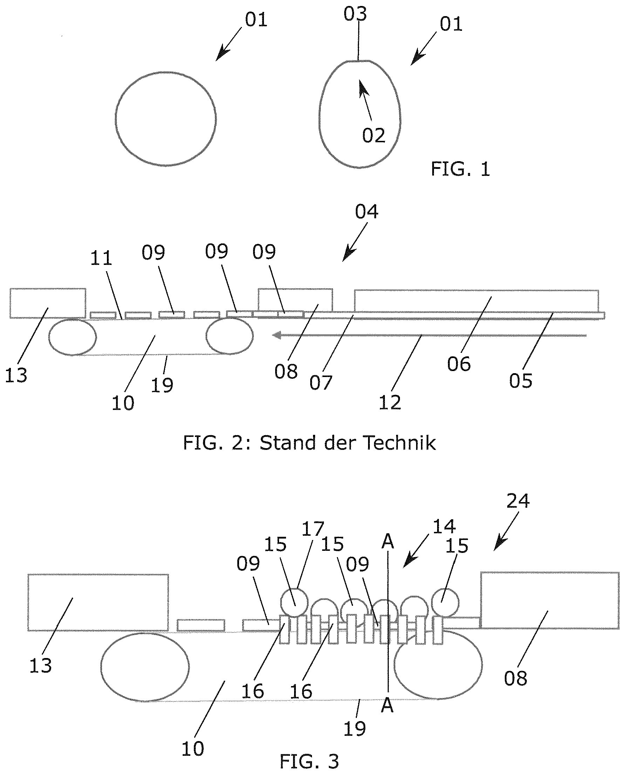

Die Fig. 1 zeigt zwei Tubenkörper 01 in einer Querschnittsansicht. Bei dem linken Tubenkörper 01 ist ein Soll-Zustand des Querschnitts dargestellt. Dieser zeichnet sich durch einen vollständig oder weitestgehend kreisrunden Querschnitt aus. Die rechte Seite zeigt die realistische Querschnittsform oder einen tatsächlichen Querschnitt eines Tubenkörpers 01 nach der Herstellung aus einem Kunststofflaminat, wobei in einem Nahtbereich 02 des Tubenkörpers 01 eine Längsnaht 03, insbesondere eine Schweißnaht gegebenen ist oder vorliegt, an der zwei gegenüberliegende Seiten oder Enden des Laminats auf Stoß oder in räumlicher Überlappung miteinander verbunden, insbesondere miteinander verschweißt wurden.

Es ist in der Fig. 1 bereits zu erkennen, dass die Rundheit der tatsächlichen Querschnitte der Tubenkörper 01 ungenügend oder unzureichend ist, insbesondere um die Tubenkörper 01 weiterzuverarbeiten. Daher ist es notwendig und gewünscht die Querschnittsform stärker an die optimale oder gewünschte Soll-Form der linken Seite der Fig. 1 anzunähern.

Die Fig. 2 zeigt beispielhaft eine gattungsgemäße Vorrichtung 04 zur Herstellung von Verpackungstuben. Darin wird von rechts kommend das Folien- oder Kunststofflaminat 05 in die Vorrichtung 04 eingeführt und um einen nicht im Detail dargestellten Dorn geführt. In der Verbindungseinheit 06 erfolgt dann ein Verbinden, insbesondere Verschweißen von zwei gegenüberliegenden Enden des Laminats unter Ausbildung einer nicht näher dargestellten Längsnaht. Das so erzeugte Endlosrohr 07 verlässt die Verbindungseinheit und wird einer Trenn- oder Vereinzelungseinrichtung 08 zugeführt, die beispielsweise ein Messer oder eine sonstige Schneid- oder Trennvorrichtung aufweisen kann und das Endlosrohr 07 in einzelne, voneinander getrennte Tubenkörper 09 unterteilt.

Die Tubenkörper 09 werden nach der Trennung oder Vereinzelung auf eine Transporteinrichtung 10 übergeben und entlang einer Transportstrecke 11 von der Transporteinrichtung 10 weiterbefördert. Die Transporteinrichtung 10 wird in der Regel mit einer höheren Geschwindigkeit als der Längsnahtschweißprozess oder der Vereinzelungsprozess betrieben, wodurch sich nach dem Schneiden oder Vereinzeln der Tubenkörper 09 vom Endlosrohr 07 auch eine räumliche Trennung oder Vereinzelung ergibt. Eine geringere Geschwindigkeit seitens der Transportvorrichtung ist grundsätzlich auch möglich, wenn die Tubenkörper 09 geeignet um eine Achse senkrecht zur Transportrichtung 12 gedreht werden.

Auf der Transportstrecke 11 können die Positionen der einzelnen Tubenkörper 09 erfasst werden. Vorteilhaft können die Tubenkörper 09 auch mit einem optischen System oder einem sonstigen Messsystem untersucht werden, um an einem Eintreten in die Einrichtung 13 zur Anbringung des Tubenkopfes (Header) gehindert zu werden, wenn bestimmte Qualitätsmerkmale nicht erfüllt sind. Die letztgenannte Entfernung kann beispielsweise durch ein Ausblasen mit Druckluft erfolgen. Auch für manuelle Qualitätsprüfungen können entlang der Transportstrecke Tubenkörper 09 ausgesondert oder entnommen werden.

In der Fig. 3 ist eine geänderte Variante einer Vorrichtung 04 dargestellt, in der zwischen der Einrichtung 13 zur Anbringung der Köpfe und einer Vereinzelungseinrichtung 08 eine erfindungsgemäße Vorrichtung 24 zur Verbesserung der Rundheit der Tubenkörper 09 angebracht oder integriert ist. Diese umfasst oberhalb der Transporteinrichtung 10 angeordnete Verformungsmittel 14, die als eine Vielzahl von einzelnen Verformungselementen 15 ausgestaltet sind. Die Verformungsmittel 14, insbesondere die einzelnen Verformungselemente 15 sind dabei mit einem unterschiedlichen Abstand gegenüber der Transporteinrichtung 10 ausgebildet. In der Darstellung der Fig. 3 ist bereits erkennbar, dass die Verformungselemente 15 dazu führen, dass von oben oder von der Transporteinrichtung gegenüberliegend nach radial innen eine Verformung der Tubenkörper 09 stattfindet, die wieder aufgehoben wird, nachdem die Verformungsmittel 14 oder das letzte Verformungselement 15 passiert wurden.

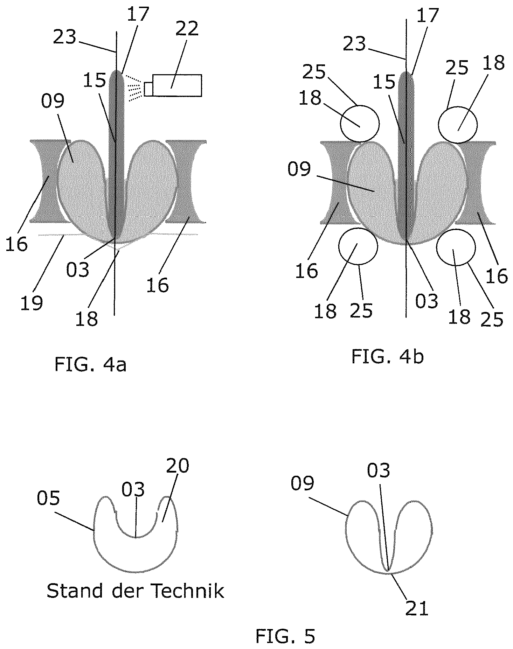

Um die Verformung zur Seite, also senkrecht zur Zeichenebene, zu begrenzen, weist die Vorrichtung an beiden Seiten der Transporteinrichtung 10 angeordnete Seitenführungselemente 16 auf, die sich über einen Teil, bevorzugt aber über die gesamte Ausdehnung der Verformungsmittel 14 erstrecken. Die Seitenführungselemente 16 sind als beidseitig angeordnete, drehbar gelagerte Rollen mit konkaver Oberfläche oder Mantelfläche ausgebildet, was anhand der Fig. 4 noch deutlicher zu erkennen ist.

Die Verformungselemente 15 sind beispielsweise als Räder oder Scheibenräder ausgebildet und weisen an ihrer radialen Außenseite eine Kontaktoberfläche 17 auf, die ihrerseits mit den Tubenkörpern 09 in Verbindung gebracht wird, um diese radial nach innen zu verformen. Die Verformungsmittel 14 oder Verformungselemente 15 können bevorzugt angetrieben ausgestaltet sein, um damit sicherzustellen, dass die Kontaktoberfläche 17 lediglich auf den Tubenkörper 09 abgleitet oder auf diesen abrollt, es nicht jedoch zu einem Schleifen oder zu einem Schlupf zwischen den Tubenkörpern 09 und den Verformungsmitteln/Verformungselementen 14, 15 kommt. Dies verhindert eine Beeinflussung der Außenoberfläche der Tubenkörper 09, insbesondere ein Zerkratzen.

In der Darstellung der Fig. 4 ist ein Schnitt entlang der Ebene A-A der Fig. 3 gezeigt. Darin zu erkennen ist einerseits die Ausgestaltung der Seitenführungselemente 16 als drehbar gelagerte Rollen mit konkaver Oberfläche. Gleichermaßen ist auch zu erkennen, dass die Tubenkörper 09 von Führungsmitteln 18, die im Beispiel der Fig. 4 als Teil der Transporteinrichtung 10 ausgebildet sind gegen eine Rotation um die Längsachse gesichert werden. Die Führungsmittel 18 sind beispielsweise in der Form eines V-Profils und darüber hinaus in Form einer Gummierung des Transportbandes 19 der Transporteinrichtung 10 ausgebildet. In der Fig. 4 ist auch erkennbar, dass die Verformungselemente 15 vorteilhaft eine konvex gekrümmte Kontaktoberfläche 17 aufweisen, um eine Knickbildung aufseiten der Tubenkörper 09 zu verhindern oder zu minimieren. Die Fig. 4 zeigt auch die Verformung der Tubenkörper 09 hin zu einem Querschnitt einer U-förmigen oder V-förmigen Kontur. Dabei verlaufen die Verformungselemente 15 entlang einer Spiegelsymmetrieachse 23. Weiter ist der Tubenkörper 09 so angeordnet, dass die Kontaktoberfläche 17 nach Möglichkeit genau auf die Längsnaht 03, insbesondere Schweißnaht einwirkt und diese nach radial innen bezogen auf den unverformten Querschnitt der Tubenkörper hin verformt.

In der Fig. 4 sind beispielhaft auch Kühlelemente 22 vorgesehen, die mit den Verformungsmitteln 14 oder den Verformungselementen 15 zusammenwirkend ausgebildet sind und im Betrieb ein aktives Kühlen der Verformungsmittel 14 oder Verformungselemente 15 ermöglichen. Die Kühlelemente 22 können beispielsweise als Kühl-Düsen ausgeführt sein. Auch kann eine nicht weiter dargestellte Kühleinheit vorgesehen sein, die eingerichtet ist die Tubenkörper 09 insbesondere die Längsnaht 03 während zumindest eines Teils der Einwirkung der Verformungsmittel 14 oder der Verformungselemente 15 zu kühlen.

Alternativ zu dem als gummiertes V-Band ausgeführten Transportband 19 der Transporteinrichtung 10 kann auch eine Transportkette als Transporteinrichtung 10 vorgesehen sein. Eine weitere Alternative der Transporteinrichtung 10 ist in der Fig. 4b dargestellt. Hier umfasst die Transporteinrichtung 10 vier gummierte, angetriebene Riemen 25, die beispielsweise als Endlosriemen ausgebildet sein können. Die Fig. 4b zeigt dabei nur die Abschnitte der Riemen 25 im Querschnitt, die mit dem Tubenrohr zur Anlage kommen. Die Riemen bilden gleichzeitig auch Führungsmittel 18 aus, die in gleicher Weise eine Rotation des Tubenkörpers 09 um die Längsachse verhindern, wie die Führungsmittel 18 der Fig. 4a.

In den Fig. 4a und 4b ist zudem erkennbar, dass die Verformung die Tubenkörper 09 in einen Querschnitt umformt, der eine u-förmige oder v-förmige Kontur nachbildet, wobei die Längsnaht 03 im Bereich einer Spiegelsymmetrieachse 23 der Kontur oder des Querschnitts angeordnet ist.

Die Fig. 5 zeigt auf der linken Seite einen Querschnitt eines Endlosrohrs 07, das in bekannter Weise gemäß des Stands der Technik bereits eine Verformung durchläuft, um die Ovalität des Endlosrohres 07 zu verringern und dadurch auch die Rundheit der anschließend vereinzelten Tubenkörper 09 zu verbessern. Dieses Endlosrohrprofil oder dieser Endlosrohrquerschnitt 20 zeigt eine Verformung, die die Naht 03 oder Schweißnaht nur bis etwas 40% des ursprünglichen Durchmessers des Endlosrohres 07 verformt. Im Gegensatz dazu zeigt die rechte Seite der Fig. 5 einen Tubenkörper 09 gemäß der vorliegenden Erfindung oder in einem Verformungszustand gemäß der vorliegenden Erfindung. Der Tubenkörper 09 wird dabei über 40%, bevorzugt über 80% und in Ausnahme- oder Extremfällen sogar bis zu 100% des Durchmessers des ursprünglichen Tubenkörpers verformt, sodass in dem besagten Extremfall die Längsnaht 03 sogar die gegenüberliegende Wandung 21 des Tubenkörpers 09 berühren kann. Dies bedeutet auch, dass der Erfindung die Erkenntnis zugrunde liegt, dass ein vereinzelter Tubenroh-Rohling 09 deutlich stärker deformiert werden kann als ein Endlosrohr 07, ohne dabei Beschädigungen zu erleiden oder dass sonstige negative Beeinträchtigungen der Tubenkörper 09 eintreten. Durch die stärkere Verformung kann der Ovalität besser entgegengewirkt werden. Deformiert man hingegen das Endlosrohr 07 zu stark, so neigt dieses dazu zu knicken, worauf der Herstellungsprozess abbricht. Die auf der rechten Seite der Fig. 5 beispielhaft dargestellte starke Verformung im Bereich der Längsnaht 03 führt zu einer starken Krümmung der Wandung der Tubenkörper 09 in diesem Bereich, was eine dauerhafte, der Ovalität entgegen gerichtete und damit plastische Verformung nach sich zieht. Durch die geeignete Wahl der Verformungstiefe und des Krümmungsradius kann die erhaltene Form und damit die Rundheit optimiert werden.

### Bezugszeichen

- 01: Tubenkörper
- 02: Nahtbereich
- 03: Längsnaht / Naht
- 04: Vorrichtung
- 05: Kunststofflaminat
- 06: Verbindungseinheit
- 07: Endlosrohr
- 08: Vereinzelungseinheit
- 09: Tubenkörper
- 10: Transporteinrichtung
- 11: Transportstrecke
- 12: Transportrichtung
- 13: Einrichtung zur Anbringung von Köpfen
- 14: Verformungsmittel
- 15: Verformungselemente
- 16: Seitenführungselemente
- 17: Kontaktoberfläche
- 18: Führungsmittel
- 19: Transportband
- 20: Endlosrohrquerschnitt
- 22: Kühlelemente
- 23: Spiegelsymmetrieachse
- 24: Vorrichtung
- 25: Riemen

## Patentansprüche

1. Verfahren zur Verbesserung der Rundheit von einer Längsnaht (03), insbesondere einer Längsschweißnaht, aufweisenden Tubenkörper (09) für Verpackungstuben, bevorzugt als Teil eines Verpackungstubenherstellungsverfahrens, umfassend die Verfahrensschritte:
- Übergabe der einzelnen Tubenkörper (09) an eine Transporteinrichtung (10);
- Transport der Tubenkörper (09) entlang einer Transportstrecke (11) mit der Transporteinrichtung (10); wobei während des Transports entlang der Transportstrecke (11) der Tubenkörper (09) eine abschnittweise und/oder zweitweise radiale Verformung nach innen erfährt, indem der Tubenkörper (09) Verformungsmittel (14) passiert.

2. Verfahren nach Anspruch 1,
**dadurch gekennzeichnet,**
**dass** eine maximale radiale Verformung im Bereich der Längsnaht (03) des Tubenkörpers (09) erfolgt und/oder die Verformung die Tubenkörper (09) in einen Querschnitt umformt, der eine u-förmige oder v-förmige Kontur nachbildet, wobei die Längsnaht (03) im Bereich einer Spiegelsymmetrieachse (23) der Kontur oder des Querschnitts angeordnet ist.

3. Verfahren nach Anspruch 1 oder 2,
**dadurch gekennzeichnet,**
**dass** entlang der Transportstrecke (11) eine Rotation der Tubenkörper (09) um eine Längsachse, mittels Führungsmitteln (18), verhindert wird.

4. Verfahren nach einem der Ansprüche 1 bis 3,
**dadurch gekennzeichnet,**
**dass** entlang der Transportstrecke (11), zumindest abschnittsweise, bevorzugt über die gesamte Erstreckung oder Ausdehnung der Verformungsmittel (14), eine seitliche Verformung der Tubenkörper durch Seitenführungselemente (16) begrenzt wird.

5. Verfahren nach einem der Ansprüche 1 bis 4,
**dadurch gekennzeichnet,**
**dass** die Verformung entlang der Transportstrecke (11) variiert wird, in dem sich die Verformungsmittel (14) an unterschiedlichen Stellen der Transportstrecke (11) unterschiedlich weit in Richtung der Tubenkörper (09) und/oder der Transporteinrichtung (10) erstrecken.

6. Verfahren nach einem der Ansprüche 1 bis 5,
**dadurch gekennzeichnet,**
**dass** die Verformungsmittel (14) zumindest zeitweise eine radiale Verformung eines Teils der Oberfläche der Tubenkörper (09) von mehr als 40%, bevorzugt mehr als 60%, besonders bevorzugt mehr als 80%, des ursprünglichen, unverformten Rohrdurchmessers erzeugen.

7. Verfahren nach einem der Ansprüche 1 bis 6,
**dadurch gekennzeichnet,**
**dass** die Verformungsmittel (14) eine Kontaktoberfläche (15) zur Anlage an den Tubenkörpern (09) aufweisen, die sich bei der Anlage an den Tubenkörpern (09) mit diesen mitbewegt.

8. Verfahren nach einem der Ansprüche 1 bis 7,
**dadurch gekennzeichnet,**
**dass** die Verformung in einem Zustand des Tubenkörpers (09) beginnt, in dem die Längsnaht (03) des Tubenkörpers (09) eine Temperatur von mehr als 40°C, bevorzugt von mehr als 50°C, aufweist.

9. Verfahren zur Herstellung von Verpackungstuben aus einem Tubenkörper (09) und einem Kopf zur Anbringung an dem Tubenkörper (09)
**gekennzeichnet durch**
ein Verfahren zur Verbesserung der Rundheit von eine Längsnaht (03), insbesondere eine Längsschweißnaht, aufweisenden Tubenkörpern (09) nach einem der Ansprüche 1 bis 8.

10. Verfahren nach Anspruch 9,
**dadurch gekennzeichnet,**
**dass** die Verformung durchgeführt wird, während die Tubenkörper (09) einer Einrichtung (13) zur Anbringung des Kopfes zugeführt werden oder während die Tubenkörper (09) in der Einrichtung (13) zur Anbringung des Kopfes verarbeitet werden.

11. Vorrichtung zur Verbesserung der Rundheit von einer Längsnaht, (03) insbesondere einer Längsschweißnaht, aufweisenden Tubenkörpern (09) für Verpackungstuben, bevorzugt als Teil einer Verpackungstubenherstellungsvorrichtung, umfassend eine Transporteinrichtung (10) zur Aufnahme und zum Transsport einzelner Tubenkörpern (09) entlang einer Transportstrecke (11), und Verformungsmittel (14), die so angeordnet sind, dass während des Transports entlang der Transportstrecke (11) die Tubenkörper (09) eine abschnittweise und/oder zweitweise radiale Verformung nach innen erfahren, indem die Transporteinrichtung (10) die Tubenkörper (09) an den Verformungsmitteln (14) vorbei transportiert.

12. Vorrichtung nach Anspruch 11,
**dadurch gekennzeichnet,**
**dass** die Verformungsmittel (14) eine Vielzahl von einzelnen Verformungselementen (15) umfassen.

13. Vorrichtung nach Anspruch 11 oder 12,
**dadurch gekennzeichnet,**
**dass** die Verformungselemente (15) als drehbar gelagerte Scheiben ausgebildet sind, deren Lagerpunkte entlang der Transportstrecke (11) angeordnet sind.

14. Vorrichtung nach einem der Ansprüche 1 bis 13,
**dadurch gekennzeichnet,**
**dass** mit Führungsmittelen (18) entlang der Transportstrecke (11) eine Rotation der Tubenkörper (09) um eine Längsachse verhindert wird.

15. Vorrichtung nach einem der Ansprüche 11 bis 14,
**dadurch gekennzeichnet,**
**dass** Seitenführungselemente (16), die entlang der Transportstrecke (11), zumindest abschnittsweise, bevorzugt über die gesamte Erstreckung oder Ausdehnung der Verformungsmittel (14) angeordnet sind, eine seitliche Verformung der Tubenkörper (09) begrenzen.

16. Vorrichtung zur Herstellung von Verpackungstuben aus einem Tubenkörper (09) und einem Kopf zur Anbringung an dem Tubenkörper (09),
**gekennzeichnet durch**
eine Vorrichtung zur Verbesserung der Rundheit von eine Längsnaht (03), insbesondere eine Längsschweißnaht, aufweisenden Tubenkörpern (09) nach einem der Ansprüche 11 bis 15.

## Claims

1. A method for improving the roundness of tube bodies (09) having a longitudinal seam (03), in particular a longitudinal weld seam, and intended for packaging tubes, preferably as part of a packaging-tube production method, the method comprising the following steps:
- transferring the individual tube bodies (09) to a transport unit (10).
- transporting the tube bodies (09) along a transportation path (11) using the transport unit (10); the tube body (09) being subjected to radial inward deformation in sections and/or temporarily during transportation along the transportation path (11) by the tube body (09) passing through deforming means (14).

2. The method according to claim 1,
**characterized in that**
a maximum radial deformation in the area of the longitudinal seam (03) of the tube body (09) takes place and/or the deformation reshapes the cross section of the tube body (09), the cross section replicating a U-shape or V-shape contour, the longitudinal seam (03) being disposed in the area of a mirror-symmetry axis (23) of the contour or the cross section.

3. The method according to claim 1 or 2,
**characterized in that**
a rotation of the tube bodies (09) about a longitudinal axis is prevented along the transportation path (11) by means of guide means (18).

4. The method according to any one of the claims 1 to 3,
**characterized in that**
a lateral deformation of the tube bodies is limited along the transport path (11), at least in sections, preferably the entirety of the extension or length of the deforming means (14), by lateral guide elements (16).

5. The method according to any one of the claims 1 to 4,
**characterized in that**
the deformation along the transport path (11) is varied by the deforming means (14) extending towards the tube bodies (09) and/or the transport unit (10) at varying depths and at different positions along the transport path (11).

6. The method according to any one of the claims 1 to 5,
**characterized in that**
the deforming means (14) at least temporarily generate a radial deformation of a part of the surface of the tube bodies (09) of more than 40%, preferably more than 60%, particularly preferably more than 80 %, of the originally undeformed tube diameter.

7. The method according to any one of the claims 1 to 6,
**characterized in that**
the deforming means (14) have a contact surface (15) for abutment against the tube bodies (09), the contact surface (15) moving along with the tube bodies (09) when abutting against them.

8. The method according to any one of the claims 1 to 7,
**characterized in that**
the deformation begins in a state of the tube body (09) in which the longitudinal seam (03) of the tube body (09) has a temperature of more than 40 °C, preferably more than 50 °C.

9. A method for producing packaging tubes of a tube body (09) and a head for attachment on the tube body (09),
**characterized by**
a method for improving the roundness of tube bodies (09) having a longitudinal seam (03), in particular a longitudinal weld seam, according to any one of the claims 1 to 8.

10. The method according to claim 9,
**characterized in that**
the deformation is carried out while the tube bodies (09) are supplied to a unit (13) for attaching the head or while the tube bodies (09) are processed in the unit (13) for attaching the head.

11. A device for improving the roundness of tube bodies (09) having a longitudinal seam (03), in particular a longitudinal weld seam, and intended for packaging tubes, preferably as part of a packaging-tube production device, the device comprising a transport unit (10) for receiving and transporting individual tube bodies (09) along a transport path (11) and deforming means (14) which are disposed in such a manner that the tube bodies (09) are subjected to a radial inward deformation in sections and/or temporarily during transport along the transport path by the transport unit (10) transporting the tube bodies (09) past the deforming means (14).

12. The device according to claim 11,
**characterized in that**
the deforming means (14) comprise a plurality of individual deforming elements (15).

13. The device according to claim 11 or 12,
**characterized in that**
the deforming elements (15) are designed as rotationally mounted disks whose mounting points are disposed along the transport path (11).

14. The device according to any one of the claims 11 to 13,
**characterized in that**
a rotation of the tube bodies (09) about a longitudinal axis is prevented along the transport path (11) by means of guide means (18).

15. The device according to any one of the claims 11 to 14,
**characterized in that**
lateral guide elements (16), which are disposed along the transport path (11) at least in sections, preferably across the entire extension or length of the deforming means (14), limit a lateral deformation of the tube bodies (09).

16. A device for producing packaging tubes from a tube body (09) and a head for attachment on the tube body (09),
**characterized by**
a device for improving the roundness of tube bodies (09) having a longitudinal seam (03), in particular a longitudinal weld seam, according to any one of the claims 11 to 15.

## Revendications

1. Procédé pour améliorer la rondeur de corps de tube (09) ayant un cordon longitudinal (03), notamment un cordon de soudure longitudinal, et destinés à des tubes d'emballage, de préférence dans le cadre d'un procédé de production pour des tubes d'emballage, le procédé comprenant les étapes suivantes :
- transfert du corps de tube (09) individuel vers une unité de transport (10).
- transport du corps de tube (09) le long d'un trajet de transport (11) à l'aide de l'unité de transport (10) ; le corps de tube (09) étant soumis à une déformation radiale vers l'intérieur en sections et/ou temporairement pendant le transport le long du trajet de transport (11) par le passage du corps de tube (09) à travers des moyens de déformation (14).

2. Procédé selon la revendication 1,
**caractérisé en ce**
**qu'**une déformation radiale maximale dans la zone du cordon longitudinal (03) du corps de tube (09) a lieu et/ou la déformation donne une forme différente à la section transversale du corps de tube (09), la section transversale reproduisant un contour en forme de U ou de V, le cordon longitudinal (03) étant disposé dans la zone d'un axe (23) de symétrie miroir du contour ou de la section transversale.

3. Procédé selon la revendication 1 ou la revendication 2,
**caractérisé en ce**
**qu'**une rotation du corps de tube (09) autour d'un axe longitudinal est empêchée le long du trajet de transport (11) au moyen de moyens de guidage (18).

4. Procédé selon l'une quelconque des revendications 1 à 3,
**caractérisé en ce**
**qu'**une déformation latérale de corps de tube est limitée le long du trajet de transport (11), au moins en sections, de préférence à travers la totalité de l'extension ou de la longueur des moyens de déformation (14), par des éléments de guidage latéraux (16).

5. Procédé selon l'une quelconque des revendications 1 à 4,
**caractérisé en ce que**
la déformation le long du trajet de transport (11) est modifiée par les moyens de déformation (14) s'étendant vers les corps de tube (09) et/ou vers l'unité de transport (10) à différentes profondeurs et à différentes positions le long du trajet de transport (11).

6. Procédé selon l'une quelconque des revendications 1 à 5,
**caractérisé en ce que**
les moyens de déformation (14) génèrent au moins temporairement une déformation radiale d'une partie de la surface de corps de tube (09) de plus de 40 %, de préférence plus de 60 %, particulièrement de préférence plus de 80 %, du diamètre du tube non déformé à l'origine.

7. Procédé selon l'une quelconque des revendications 1 à 6,
**caractérisé en ce que**
les moyens de déformation (14) ont une surface de contact (15) pour buter contre les corps de tube (09), la surface de contact (15) se déplaçant avec les corps de tube (09) lorsqu'elle est en butée contre eux.

8. Procédé selon l'une quelconque des revendications 1 à 7,
**caractérisé en ce que**
la déformation commence dans un état du corps de tube (09) dans lequel le cordon longitudinal (03) du corps de tube (09) a une température supérieure à 40 °C, de préférence supérieure à 50 °C.

9. Procédé de fabrication de tubes d'emballage à partir d'un corps de tube (09) et d'une tête de fixation sur le corps de tube (09),
**caractérisé par**
un procédé pour améliorer la rondeur de corps de tube (09) ayant un cordon longitudinal (03), notamment un cordon de soudure longitudinal, selon l'une quelconque des revendications 1 à 8.

10. Procédé selon la revendication 9,
**caractérisé en ce que**
la déformation est effectuée pendant que les corps de tube (09) sont fournis à une unité (13) de fixation de la tête ou pendant que les corps de tube (09) sont traités dans l'unité (13) de fixation de la tête.

11. Dispositif pour améliorer la rondeur de corps de tube (09) ayant un cordon longitudinal (03), notamment un cordon de soudure longitudinal, et destinés à des tubes d'emballage, de préférence comme partie d'un dispositif de production pour des tubes d'emballage, le dispositif comprenant une unité de transport (10) pour recevoir et transporter des corps de tube (09) individuels le long d'un trajet de transport (11) et des moyens de déformation (14) qui sont disposés de manière à ce que les corps de tube (09) sont soumis à une déformation radiale vers l'intérieur en sections et/ou temporairement pendant le transport le long du trajet de transport par l'unité de transport (10) transportant les corps de tube (09) devant les moyens de déformation (14).

12. Dispositif selon la revendication 11,
**caractérisé en ce que**
les moyens de déformation (14) comprennent une pluralité d'éléments de déformation (15) individuels.

13. Dispositif selon la revendication 11 ou la revendication 12,
**caractérisé en ce que**
les éléments de déformation (15) sont conçus comme des disques montés en rotation dont les points de montage sont disposés le long du trajet de transport (11).

14. Dispositif selon l'une quelconque des revendications 11 à 13,
**caractérisé en ce**
**qu'**une rotation du corps de tube (09) autour d'un axe longitudinal est empêchée le long du trajet de transport (11) au moyen de moyens de guidage (18).

15. Dispositif selon l'une quelconque des revendications 11 à 14,
**caractérisé en ce que**
des éléments de guidage (16) latéraux, qui sont disposés le long du trajet de transport (11) au moins en partie, de préférence à travers l'entière d'extension ou de la longueur de moyens de déformation (14), limitent une déformation latérale de corps de tube (09).

16. Dispositif de fabrication de tubes d'emballage à partir d'un corps de tube (09) et d'une tête à fixer sur le corps de tube (09),
**caractérisé par**
un dispositif pour améliorer la rondeur des corps de tube (09) ayant un cordon longitudinal (03), notamment un cordon de soudure longitudinal, selon l'une quelconque des revendications 11 à 15.
